# EUROPÄISCHE PATENTANMELDUNG

(11) **EP 4 075 654 A1**
(43) Veröffentlichungstag der Anmeldung: **19.10.2022**
(21) Anmeldenummer: 22167067.2
(22) Anmeldetag: 07.04.2022
(51) Int. Cl.: H02M 1/42, H02M 1/10, H02M 1/00, H02M 1/32

(54) **EINPHASENBETRIEB EINES HYBRIDEN GLEICHRICHTERS MIT AKTIVEM FILTER UND STROMEINPRÄGUNG DER DRITTEN HARMONISCHEN**

(30) Priorität: 12.04.2021 DE 102021108996
(71) Anmelder: ebm-papst Mulfingen GmbH & Co. KG, 74673 Mulfingen (DE)
(72) Erfinder: SCHROTH, Sebastian, 74635 Kupferzell (DE)
(74) Vertreter: Staeger & Sperling Partnerschaftsgesellschaft mbB

(57) **Zusammenfassung**

Die Erfindung betrifft den Betrieb einer Zwischenkreisaufbereitung bei gleichzeitiger Reduzierung der Oberschwingungsanteile im Eingangsstrom, d. h. zur Verwendbarkeit bzw. Anwendbarkeit in unterschiedlichen Versorgungsnetzen, insbesondere sowohl in einphasigen als auch dreiphasigen Netzen mit gleicher Schaltungstopologie oder beim Ausfall einer Phase.

## Beschreibung

Die vorliegende Erfindung beschäftigt sich mit der effizienten netzartunabhängigen Zwischenkreisaufbereitung bei gleichzeitiger Reduzierung der Oberschwingungsanteile im Eingangsstrom, d. h. zur Verwendbarkeit bzw. Anwendbarkeit in unterschiedlichen Versorgungsnetzen, insbesondere sowohl in einphasigen als auch dreiphasigen Netzen mit gleicher Schaltungstopologie. Insbesondere soll eine 3~Phasen-PFC-Topologie so ausgestaltet sein, dass eine Anpassung der Ansteuerung möglich ist, so dass sich diese Topologie auch für einen 1~Phasigen Netzanschluss bei gleicher Abgabeleistung einsetzen lässt. Dabei gilt es zu beachten, dass die Oberschwingungsanteile netzseitig gering zu halten sind.

Aus dem Stand der Technik sind unterschiedliche Konzepte bekannt, um die Zwischenkreisaufbereitung bei unterschiedlichen Versorgungsnetzarten zu realisieren.

Aus der EP 0696838 B1 ist zum Beispiel eine mehrphasige Gleichrichterbrückenschaltung für einen einphasigen Eingang bekannt.

Aus der EP 3509212A1 ist ein Motorantriebs-Leistungsumwandlungssystem bekannt, einschließlich einer Filterschaltung mit einer einzelnen Induktivität und einem Kondensator für jede Eingangsphase, eines aktiven Gleichrichters mit Siliziumkarbid-Gleichrichterschaltvorrichtungen, einer Gleichstrom-Zwischenkreisschaltung mit einem Film-Gleichstrom-Zwischenkreiskondensator, einem Wechselrichter sowie einer Steuerung, um die Gleichrichterschaltvorrichtungen mit einer PWM-Gleichrichterschaltfrequenz zu betreiben.

Eine weitere aus dem Stand der Technik bekannte und verbreitete Lösung bietet der Vienna-Gleichrichter. Der Vienna-Gleichrichter zeichnet sich im Gegensatz zu der herkömmlichen bei 3-Phasenstrom verwendeten Sechspuls-Brückenschaltung (B6) durch einen wesentlich geringeren Oberschwingungsanteil auf der Wechselspannungsseite aus und liefert sogar eine doppelt so hohe Gleichspannung. Aufgrund des fast sinusförmigen Stromverlaufes ist vor allem bei größeren Leistungen ein kleinerer Netzfilter und somit ein geringeres Volumen für den Gleichrichter nötig.

Eine Aufgabe der Erfindung besteht aber auch darin eine 3-Phasen-PFC-Topologie so auszugestalten, dass eine Anpassung der Ansteuerung möglich ist, so dass sich diese Topologie auch für einen 1~Phasigen Netzanschluss einsetzen lässt.

Aus der Publikation DE 10 2019 131410 A ist bereits eine solche Lösung bekannt, wie mit einem 3-Phasen-Vienna-Gleichrichter ein Betrieb an einer Netzphase möglich ist.

Der Nachteil beim Vienna-Gleichrichter sind die Kosten und ist die aufwändige und notwendige elektronische Ansteuerschaltung, welche den Gleichrichter mittels Pulsweitenmodulation (PWM) ansteuert.

Die diversen aus dem Stand der Technik bekannten Systeme zeigen allerdings zumindest einen der nachfolgenden genannten Nachteile oder Probleme, die es zu verbessern oder beseitigen gilt:
a) Zu hoher Oberschwingungsgehalte des Aufnahmestromes;
b) Keine netzartunabhängige Aufbereitung der Zwischenkreisspannung möglich;
c) Unsymmetrische Belastung der Netzphasen;
d) Keine Möglichkeit der Reduktion der Elektronikvarianz;
e) Hohe Werkzeugkosten und/oder Entwicklungskosten für Design und Herstellung;
f) Hohe Lagerkosten aufgrund der Variantenvielfalt.

Der Erfindung liegt deshalb die Aufgabe zugrunde, vorbesagte Nachteile zu überwinden und eine kostengünstig herstellbare Lösung zu schaffen, mit der eine effiziente Zwischenkreisaufbereitung bei insbesondere einer Reduktion der Oberschwingungsanteile im Eingangsstrom realisierbar ist, die sich gleichermaßen für einen 3-Phasen als auch einen 1-Phasen Betrieb eignet bzw. auch bei Phasenausfall betrieben werden kann, ohne dass dann erhebliche Oberschwingungen netzseitig auftreten.

Diese Aufgabe wird durch die Merkmalskombination gemäß Patentanspruch 1 gelöst.

Eine Grundidee ist dabei ein Konzept mit einer 3~Phasen-PFC-Topologie an der für den 3-Phasenbetrieb drei Netz-Phasen L1, L2, L3 anschließbar sind, in einem jeweils Einphasenbetrieb zu betreiben, aufweisend eine 3-Phasen-Gleichrichterschaltung ergänzt mit Schaltern zum Aktivieren und Deaktivieren jeweils einer oder mehrere der Phasen L1, L2, L3 und zwei weitere unabhängig ansteuerbare Schaltern, wobei zum Einphasen-PFC-Betrieb die jeweiligen Schalter in den Phasen gesteuert geöffnet oder geschlossen werden, um den Strom über zwei aktive Phasen sinusförmig und in Phase zum Netz einzuregeln.

Ein Kerngedanke liegt dabei darin, dass eine Schaltungsanordnung, z. B. der Minnesota-Rectifier in Kombination mit dem Betrieb bei Phasenausfall gemäß dem Konzept der Erfindung ermöglicht wird.

Ein weiterer relevanter Aspekt ist es, dass das Umschalten zwischen dem einphasigen und dem dreiphasigen Betrieb auch bei Netzausfällen oder bei Phasenausfällen aktiviert wird und die Schaltung für diesen Zweck daher verwendet werden kann.

Erfindungsgemäß ist hierzu eine Schaltungsanordnung vorgesehen, aufweisend eine 3-phasige PFC-Stufe mit drei Anschlussklemmen für den Anschluss der Phasen L1, L2, L3 für einen 3-Phasenbetrieb, die bestimmungsgemäß ausgebildet ist, auch in einem Einphasenbetrieb betrieben zu werden, indem zwischen einen Zwischenkreis einer 3~Phasen-Gleichrichterschaltung und einer Gleichrichter-Dioden-Brücke (umfassend die Gleichrichterdioden) eine Schalteranordnung aus zwei Dioden-gebrückten, jeweils unabhängig ansteuerbaren Schaltern "S1, S2" geschaltet ist, wobei ferner die Phasen L1, L2, L3 über jeweilige Leitungspfade an einem Sternpunkt zusammengeführt sind und wobei in jedem Leitungspfad jeweils ein bidirektionaler Schalter zum Aktivieren und Deaktivieren jeweils der betreffenden Phasen am Sternpunkt vorgesehen sind und wobei zum Einphasen-PFC-Betrieb die jeweiligen Schalter in den Phasen gesteuert geöffnet oder geschlossen werden, um den Strom über jeweils zwei aktive Phasen sinusförmig und in Phase zum Netz einzuregeln.

Es wird in einer bevorzugten Ausgestaltung vorgesehen, dass beim Einphasen-PFC-Betrieb nur zwei der drei Phasen, vorzugsweise die Phasen L1, L2 angeschlossen oder verbunden sind.

Weiter ist mit Vorteil vorgesehen, dass der Zwischenkreis neben dem Hauptzwischenkreiskondensator auch noch einen über einen Schalter zuschaltbaren Kondensator aufweist. Aufgrund der im 3-phasigen Betrieb vorteilhaften Verwendung kleiner Zwischenkreiskondensatoren kann bei Erweiterung auf den einphasigen Betrieb das Hinzuschalten eines zweiten Zwischenkreiskondensators von Vorteil sein, um eine mögliche Abgabeleistung der Schaltung zu erhöhen bei gleichzeitiger Begrenzung der Spannungswelligkeit im Zwischenkreis.

In einer weiteren bevorzugten Ausgestaltung der Erfindung ist vorgesehen, dass zwischen dem Sternpunkt der Phasen und einem Mittenabgriff zwischen den Schaltern der besagten Schalteranordnung eine Induktivität geschaltet ist. Weiter vorteilhaft ist es, wenn zwischen dem einen Schalter der Schaltungsanordnung und den Gleichrichterdioden der Gleichrichter-Dioden-Brücke ebenfalls eine Induktivität geschaltet ist.

Es wird in einer bevorzugten Ausgestaltung vorgesehen, dass der eine Schalter der besagten Schalteranordnung eine Diode mit einer Durchlassrichtung weg vom zweiten Schalter der Schalteranordnung und der zweite Schalter eine Diode mit einer Durchlassrichtung weg vom ersten Schalter besitzt und vorzugsweise ein Mittenabgriff dazwischen liegt, der mit dem Sternpunkt der drei Phasen L1, L2, L3 verbunden ist.

Ein weiterer Aspekt der vorliegenden Erfindung betrifft neben der Schaltung als solcher auch das erfindungsgemäße Verfahren zum Betreiben einer wie zuvor beschriebenen 3-Phasen-Schaltungsanordnung im Einphasen-PFC-Betrieb, indem beim Anliegen einer positiven Netzhalbwelle an der Phase L1, der entsprechende Schalter in dem zugehörigen Leitungspfad geschlossen wird und dann durch das Einschalten vom zweiten Schalter ein ansteigender Strom vom Anschluss der Phase über den Schalter über die entsprechende Gleichrichterdiode zum Anschluss der Phase generiert wird und dann durch das Abschalten dieses zweiten Schalters dieser Strom über die Diode im ersten Schalter (der Schalteranordnung) oder über den (rückwärts) geschalteten Schalter in den Zwischenkreis und über dessen Masse zurück zur entsprechenden Gleichrichterdiode der Gleichrichter-Dioden-Brücke geführt zum Anschluss der zweiten (weiteren angeschlossenen) Phase geführt wird.

In ähnlicher Weise kann dies auch für die negative Netzhalbwelle erfolgen. Beim Anliegen einer negativen Netzhalbwelle an der zweiten (bzw. weiteren angeschlossenen) Phase wird der Schalter in dem entsprechenden Leitungspfad dieser Phase geschlossen und dann durch das Einschalten vom zweiten Schalter der Schalteranordnung ein ansteigender Strom vom Anschluss der zweiten angeschlossenen Phase L2 über den Schalter im Leitungspfad über die entsprechende Gleichrichterdiode zum Anschluss der ersten Phase L1 generiert wird und dann durch das Abschalten des zweiten Schalters dieser Strom über die Diode D1 im ersten Schalter (der Schaltungsanordnung) oder über den (rückwärts) geschalteten Schalter in den Zwischenkreis und über dessen Masse zurück zur entsprechenden Gleichrichterdiode der Gleichrichter-Dioden-Brücke geführt zum Anschluss der ersten Phase L1 geführt wird.

Weiter ist mit Vorteil vorgesehen, dass vor dem Schalten des oder der Schalter in den Leitungspfaden zum Sternpunkt der Phasen zunächst der Strom am Anschluss der zweiten Phase L2 auf einen vordefinierten Wert, der auch Null sein kann, eingeregelt wird.

In einer weiteren bevorzugten Ausgestaltung der Erfindung ist vorgesehen, dass der bzw. die Schalter (in den Leitungspfaden) mit der Netzfrequenz getaktet werden, währen vorzugsweise die beiden Schalter (der Schaltungsanordnung) mit einer wesentlich höheren Frequenz als der Netzfrequenz getaktet werden, insbesondere, dass diese mit einer Frequenz im Bereich zwischen 20kHz bis 150kHz pulsweitenmoduliert getaktet werden.

Damit die erfindungsgemäße Schaltung auch im dreiphasigen Betrieb arbeiten kann, ist es erforderlich einen Verbraucher in dem dreiphasigen Betrieb mit konstanter Leistung zu verwenden, wobei im einphasigen Betrieb entweder die Leistung konstant sein kann oder der Verbraucher ein Widerstand darstellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Schaltungstopologie einer erfindungsgemäßen 3-Phasen PFC-Stufe zur Realisierung eines einphasigen Betriebs;
- Fig. 2: eine erste Realisierungsoption der bidirektionalen Schalter in den Leitungspfaden der Phasen zum Sternpunkt und
- Fig. 3: eine alternative Realisierungsoption der bidirektionalen Schalter in den Leitungspfaden der Phasen zum Sternpunkt.

Im Folgenden wird die Erfindung mit Bezug auf die Figuren näher erläutert, wobei gleiche Bezugszeichen in den Ausführungsbeispielen auf gleiche strukturelle und/oder funktionale Merkmale hinweisen.

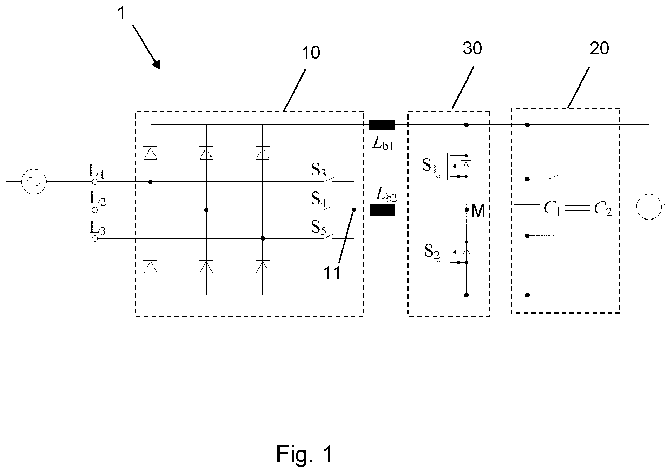

In der Fig. 1 ist zunächst eine beispielhafte Schaltungsanordnung 1 gemäß dem Konzept der Erfindung gezeigt. Die Schaltungsanordnung 1 weist eine 3-phasige PFC-Stufe mit drei Anschlussklemmen für den Anschluss der Phasen L1, L2, L3 für einen 3-Phasenbetrieb auf. Für den Einphasenbetrieb erfolgt die Leistungsaufnahme vom Netz derart, dass die Netzspannung nur an den Anschlussklemmen L1 und L2 angeschlossen wird (wie in der Figur 1 dargestellt) und die dritte Phase L3 befindet sich im Leerlauf bzw. ist vom Netz abgetrennt.

Die Schaltungsanordnung 1 besitzt einen Zwischenkreis 20 und eine Gleichrichter-Dioden-Brücke 10 mit 6 Gleichrichterdioden. Ferner ist parallel zum Zwischenkreis 20 eine Schalteranordnung 30 geschaltet. Diese Schalteranordnung 30 besteht aus zwei Schaltern S1, S2 und dazu jeweils parallel die Dioden D1, D2, welche mit entgegengesetzter Durchlassrichtung in Reihe angeordnet sind. Die beiden Schalter S1, S2 können mit bekannten Technologien realisiert werden, wichtig hierbei ist jedoch, dass diese entweder intrinsisch, im Gehäuse des Halbleiters, oder extern eine Diode D1 bzw. D2 in Sperrrichtung vorhanden ist. Die beiden Schalter S1, S2 sind unabhängig ansteuerbaren Schalter und werden zum Einregeln des Stroms mit einer deutlich höheren Frequenz als die Netzfrequenz pulsweitenmoduliert getaktet.

Wie in der Figur 1 weiter zu erkennen, sind die Phasen L1, L2, L3 über jeweilige Leitungspfade LP1, LP2, LP3 an einem Sternpunkt 11 zusammengeführt und ist in jedem der drei Leitungspfade LP1, LP2, LP3 jeweils ein bidirektionaler Schalter S3, S4, S5 angeordnet. Diese werden in Netzfrequenz getaktet und zwar zum Aktivieren und Deaktivieren jeweils der Phasen L1 und L2 am Sternpunkt 11.

Der Zwischenkreis 20 besitzt neben dem Hauptzwischenkreiskondensator C1 auch noch einen über einen Schalter S zuschaltbaren Kondensator C2, der parallel zum Kondensator C1 geschaltet ist.

Ferner sind die gezeigten Induktivitäten L_{b1}, L_{b2} vorgesehen.

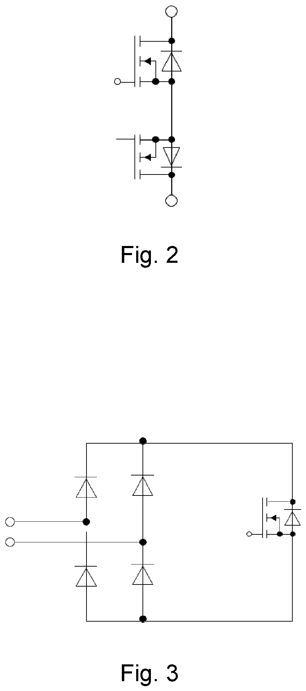

In den Figuren 2 und 3 finden sich Realisierungsoption der bidirektionalen Schalter S3, S4, S5 in den Leitungspfaden der Phasen L1, L2, L3 zum Sternpunkt 11. Die Schalter S3, S4, S5 sind dabei als bidirektionale Schalter ausgeführt. Dies kann sowohl als IGBT, wie auch als MOSFET erreicht werden.

Bei einer positiven Netzhalbwelle wird der Schalter S3 über diese Netzhalbwelle geschlossen und nach dem das Einschalten von Schalter S2 wird ein ansteigender Strom wie folgt generiert: von Phasenanschluss von L1 via S3, L_{b2} über den Schalter S2 und die Gleichrichterdiode zum Phasenanschluss L2. Durch das Abschalten von Schalter S2 kommutiert dieser Strom über die Diode in den Schalter S1 bzw. über den rückwärts eingeschalteten Schalter in den Zwischenkreis (Stromfluss: L1 - S3 - L_{b2} - S1 - C1 - Gleichrichterdiode - L2.

Bei einer negativen Netzhalbwelle erhält man ein identisches Verhalten wie bei positiver Netzspannung, lediglich mit umgekehrten Vorzeichen hinsichtlich des Netzstromes.

Beim Einschalten des Schalters S2: Stromfluss L2 - S4 - Lb2 - S2 - Gleichrichterdiode - L1 und beim Abschalten des Schalters S2: Stromfluss L2 - S4 - L_{b2} - S1 - C1 - Gleichrichterdiode - L1.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Schaltungsanordnung (1) aufweisend eine 3-phasige PFC-Stufe mit drei Anschlussklemmen für den Anschluss der Phasen (L1, L2, L3) für einen 3-Phasenbetrieb, die bestimmungsgemäß ausgebildet ist, in einem Einphasenbetrieb betrieben zu werden, indem zwischen einen Zwischenkreis (20) einer 3~Phasen-Gleichrichterschaltung und einer Gleichrichter-Dioden-Brücke (10) mit Gleichrichterdioden eine Schalteranordnung (30) aus zwei Dioden (D1, D2)-gebrückten, jeweils unabhängig ansteuerbaren Schaltern (S1, S2) geschaltet ist, wobei ferner die Phasen (L1, L2, L3) über jeweilige Leitungspfade (LP1, LP2, LP3) an einem Sternpunkt (11) zusammengeführt sind und wobei in jedem Leitungspfad (LP1, LP2, LP3) jeweils ein bidirektionaler Schalter (S3, S4, S5) zum Aktivieren und Deaktivieren jeweils der Phasen (L1, L2, L3) am Sternpunkt (11) vorgesehen sind und wobei zum Einphasen-PFC-Betrieb die jeweiligen Schalter (S3, S4, S5) in den Phasen gesteuert geöffnet oder geschlossen werden, um den Strom über zwei aktive Phasen sinusförmig und in Phase zum Netz einzuregeln.

2. Schaltungsanordnung (1) gemäß Anspruch 1, **dadurch gekennzeichnet, dass** beim Einphasen-PFC-Betrieb nur zwei der drei Phasen, vorzugsweise die Phasen (L1, L2) angeschlossen oder verbunden sind.

3. Schaltungsanordnung (1) gemäß Anspruch 1 oder 2, **dadurch gekennzeichnet, dass** der Zwischenkreis (20) neben dem Hauptzwischenkreiskondensator (C1) auch noch einen über einen Schalter (S) zuschaltbaren Kondensator (C2) aufweist.

4. Schaltungsanordnung (1) gemäß einem der vorhergehenden Ansprüche, **dadurch gekennzeichnet, dass** zwischen dem Sternpunkt (11) der Phasen (L1, L2, L3) und einem Mittenabgriff zwischen den Schaltern (S1, S2) eine Induktivität (L_{b2}) geschaltet ist.

5. Schaltungsanordnung (1) gemäß einem der vorhergehenden Ansprüche, **dadurch gekennzeichnet, dass** zwischen dem Schalter (S1) der Schaltungsanordnung (30) und den Gleichrichterdioden der Gleichrichter-Dioden-Brücke (10) eine Induktivität (L_{b1}) geschaltet ist.

6. Schaltungsanordnung (1) gemäß einem der vorhergehenden Ansprüche, **dadurch gekennzeichnet, dass** der Schalter (S1) eine Diode (D1) mit einer Durchlassrichtung weg vom Schalter (S2) und der Schalter (S2) eine Diode (D2) mit einer Durchlassrichtung weg vom Schalter (S1) besitzt und vorzugsweise ein Mittenabgriff (M) dazwischen liegt, der mit dem Sternpunkt (11) verbunden ist.

7. Verfahren zum Betreiben einer Schaltungsanordnung (1) gemäß einem der vorhergehenden Ansprüche im Einphasen-PFC-Betrieb, indem beim Anliegen einer positiven Netzhalbwelle an der Phase (L1), der Schalter (S3) in dem entsprechenden Leitungspfad (LP1) geschlossen wird und dann durch das Einschalten vom Schalter (S2) der Schalteranordnung (30) ein ansteigender Strom vom Anschluss der Phase (L1) über den Schalter (S3) über die entsprechende Gleichrichterdiode zum Anschluss der Phase (L2) generiert wird und dann durch das Abschalten des Schalters (S2) dieser Strom über die Diode (D1) im Schalter (S1) oder über den (rückwärts) geschalteten Schalter in den Zwischenkreis (20) und über dessen Masse zurück zur entsprechenden Gleichrichterdiode der Gleichrichter-Dioden-Brücke (10) geführt zum Anschluss der Phase (L2) geführt wird.

8. Verfahren insbesondere nach Anspruch 7 zum Betreiben einer Schaltungsanordnung (1) gemäß einem der vorhergehenden Ansprüche im Einphasen-PFC-Betrieb, indem beim Anliegen einer negativen Netzhalbwelle an der Phase (L2), der Schalter (S4) in dem entsprechenden Leitungspfad (LP2) geschlossen wird und dann durch das Einschalten vom Schalter (S2) der Schalteranordnung (30) ein ansteigender Strom vom Anschluss der Phase (L2) über den Schalter (S4) über die entsprechende Gleichrichterdiode zum Anschluss der Phase (L1) generiert wird und dann durch das Abschalten des Schalters (S2) dieser Strom über die Diode (D1) im Schalter (S1) oder über den (rückwärts) geschalteten Schalter in den Zwischenkreis (20) und über dessen Masse zurück zur entsprechenden Gleichrichterdiode der Gleichrichter-Dioden-Brücke (10) geführt zum Anschluss der Phase (L1) geführt wird.

9. Verfahren nach Anspruch 7 oder 8, wobei vor dem Schalten des oder der Schalter (S3, S4, S5) zunächst der Strom am Anschluss der Phase (L2) auf einen vordefinierten Wert, der auch Null sein kann, eingeregelt wird.

10. Verfahren nach einem der Ansprüche 7 bis 9, wobei der bzw. die Schalter (S3, S4, S5) mit der Netzfrequenz getaktet werden.

11. Verfahren nach einem der Ansprüche 7 bis 10, wobei die Schalter (S1, S2) mit einer wesentlich höheren Frequenz als der Netzfrequenz getaktet werden, insbesondere, dass diese mit einer Frequenz im Bereich zwischen 20kHz bis 150kHz pulsweitenmoduliert getaktet werden.
